# EUROPÄISCHE PATENTANMELDUNG

(11) **EP 4 312 353 A1**
(43) Veröffentlichungstag der Anmeldung: **31.01.2024**
(21) Anmeldenummer: 22187263.3
(22) Anmeldetag: 27.07.2022
(51) Int. Cl.: H02K 9/22, H02K 11/33

(54) **ELEKTRISCHE ANTRIEBSVORRICHTUNG**

(71) Anmelder: Siemens Aktiengesellschaft, 80333 München (DE)
(72) Erfinder: Sewiolo, Benjamin, 90587 Obermichelbach (DE)
(74) Vertreter: Siemens Patent Attorneys

(57) **Zusammenfassung**

Die Erfindung betrifft eine elektrische Antriebsvorrichtung (1,100) mit einer elektrischen rotatorischen Maschine (2, 200), die ein Gehäuse aufweist, einer Leistungselektronik-Vorrichtung (3,300), wobei die Leistungselektronik-Vorrichtung (3,300) zumindest ein Leistungshalbleitermodul (31,301) aufweist, welches zum Schalten eines elektrischen Stromes zur Versorgung der elektrischen rotatorischen Maschine (2,200) vorgesehen ist, und einer Kühleinrichtung (4,400) zum unmittelbaren Kühlen der elektrischen rotatorischen Maschine (2,200), wobei die Kühleinrichtung (4,400) in das Gehäuse integriert ist, wobei
die Kühleinrichtung (4,400) zum unmittelbaren Kühlen des zumindest einen Leistungshalbleitermoduls (31,301) ausgebildet ist, wobei das zumindest eine Leistungshalbleitermodul (31, 301) an einer Außenseite des Gehäuses angeordnet ist,
die Kühleinrichtung (4,400) für jede Leistungseinheit (34, 37,3011) des zumindest einen Leistungshalbleitermoduls (31, 301) einen dieser Leistungseinheit (34,37,3011) zugeordneten, an die Außenseite angrenzenden Bereich (44,402) aufweist, mit welchem die Leistungseinheit (34,37,3011) in thermischem Kontakt steht, wobei der Bereich (44,402) zumindest einen wärmeleitenden Werkstoff (45,46) umfasst, der zum Ableiten der Wärme von der Leistungseinheit (34,37,3011) vorgesehen ist.

## Beschreibung

Die Erfindung betrifft eine elektrische Antriebsvorrichtung mit einer elektrischen rotatorischen Maschine, die ein Gehäuse aufweist und beispielsweise als ein Elektromotor ausgebildet ist, einer Leistungselektronik-Vorrichtung, wobei die Leistungselektronik-Vorrichtung an der elektrischen rotatorischen Maschine angeordnet, vorzugsweise an der elektrischen rotatorischen Maschine unmittelbar angebracht ist und zumindest ein Leistungshalbleitermodul aufweist, welches zum Schalten eines elektrischen Stromes zur Versorgung der elektrischen rotatorischen Maschine vorgesehen ist, und einer Kühleinrichtung zum unmittelbaren Kühlen der elektrischen rotatorischen Maschine, wobei die Kühleinrichtung in das Gehäuse, vorzugsweise vollständig, integriert ist.

Außerdem betrifft die Erfindung einen digitalen Zwilling einer solchen elektrischen Antriebsvorrichtung.

Insbesondere bei Fahrzeugen im Automotive-Bereich ist es Ziel, eine integrierte, bauraum- und gewichtsoptimierte Antriebsgruppe mit entsprechenden Schnittstellen zum Fahrzeug zur Verfügung zu stellen (vgl. DE 10 2013 208 976 A1).

Die Offenlegungsschrift DE 10 2013 208 976 A1 beschreibt eine vollintegrierte elektrische Antriebsvorrichtung mit einem Elektromotor und einem Stromrichter, wobei Komponenten des Stromrichters am Umfang des Gehäuses verteilt angeordnet sind. Der Elektromotor kann ein Permanentmagnet-Synchronmotor, ein Asynchronmotor, ein fremderregter Synchronmotor oder ein anderer Motor sein.

Die Patentschrift US 9 692 277 B2 beschreibt integrierte Antriebssystembaugruppe für ein Elektrofahrzeug, wobei die integrierte Antriebssystembaugruppe Folgendes umfasst: ein Getriebe, das auf einer Mittellinie des Elektrofahrzeugs positioniert ist; einen an dem Getriebe angebrachten Wechselrichter, wobei der Wechselrichter auf einer Seite der Mittellinie positioniert ist; und einen an dem Getriebe angebrachten Elektromotor, wobei der Elektromotor elektrisch mit dem Wechselrichter verbunden ist, wobei der Elektromotor mit dem Getriebe gekoppelt ist, wobei der Elektromotor auf einer anderen Seite der Mittellinie positioniert ist; wobei das Getriebe, der Elektromotor und der Wechselrichter zu einer einzigen Einheit mit einem mehrteiligen Gehäuse zusammengebaut sind.

Die Aufgabe der Erfindung kann in einer Optimierung der Kühlung des Stromrichters einer Motor-Stromrichter-Kombination einerseits hinsichtlich ihrer Größe und andererseits hinsichtlich der Effizienz der Entwärmung der aktiven zu kühlenden Bauelemente gesehen werden.

Die Aufgabe wird durch die eingangs genannte Antriebsvorrichtung dadurch gelöst, dass die Kühleinrichtung zum unmittelbaren Kühlen des zumindest einen Leistungshalbleitermoduls ausgebildet ist, wobei das zumindest eine Leistungshalbleitermodul an einer Außenseite des Gehäuses angeordnet, vorzugsweise befestigt ist, die Kühleinrichtung für jede - im Betrieb der Leistungselektronik-Vorrichtung zu kühlende - Leistungseinheit des zumindest einen Leistungshalbleitermoduls einen dieser Leistungseinheit zugeordneten, an die Außenseite angrenzenden Bereich aufweist, mit welchem die Leistungseinheit in thermischem Kontakt steht, wobei der Bereich zumindest einen wärmeleitenden, vorzugsweise metallischen Werkstoff umfasst, der zum Ableiten der Wärme von der Leistungseinheit vorgesehen ist.

Das Anbringen des zumindest einen Leistungshalbleitermoduls an der Außenseite des Gehäuses dient dazu, dass zumindest eine Leistungshalbleitermodul mit der elektrischen rotatorischen Maschine mit zu kühlen.

Mit anderen Worten wird die vorhandene Außenkühlung der elektrischen rotatorischen Maschine, beispielsweise eines Stators eines Elektromotors zur Kühlung der Leistungseinheiten des zumindest einen Leistungshalbleitermoduls der Leistungselektronik-Vorrichtung zunutze gemacht. Hierdurch kann die Gesamtgröße und -gewicht der Antriebsvorrichtung reduziert werden.

Die Leistungselektronik-Vorrichtung ist beispielsweise segmentiert ausgebildet und weist zwei oder mehr Leistungshalbleitermodule auf.

Die Leistungseinheiten können beispielsweise als Leistungshalbleiter, insbesondere als Transistoren, beispielsweise Insulated-Gate-Bipolar-Transistor - kurz IGBT, Dioden, ... ausgebildet sein.

Eine hinsichtlich des verwendeten Bauraums besonders günstige Ausführungsform ergibt sich, wenn die Leistungseinheiten vertikal aufgebaut sind. Vorzugsweise sind die Leistungseinheiten als vertikal aufgebaute Transistoren ausgebildet.

Man unterscheidet bei integrierten Transistoren grundsätzlich zwischen vertikal (transversal) und lateral aufgebauten Transistoren. npn-Transistoren werden in der Praxis oft vertikal und pnp-Transistoren lateral aufgebaut. Vertikale Transistoren weisen einen vertikalen Stromfluss auf. Bei lateralen Transistoren erfolgt der Stromfluss horizontal, und die Stromverstärkung ist 3- bis 10-fach größer, und die Schaltfrequenzen sind höher, da die Basiszone kleiner aufgebaut werden kann. Aus diesem Grund können auch npn-Transistoren lateral aufgebaut sein, dann sind alle p- durch n- und n-durch p-Zonen ersetzt, gleiches gilt für die Dotierung des Substrats, das an eine positive Spannung angeschlossen wird.

Bei einer Ausführungsform kann es vorgesehen sein, dass die Kühleinrichtung einen Kühlkörper aufweist, der das Gehäuse der elektrischen rotatorischen Maschine bildet.

Bei einer Ausführungsform kann es vorgesehen sein, dass der Kühlkörper einstückig ausgeführt ist. Alternativ kann der Kühlkörper aus mehreren Kühlkörper-Segmenten zusammengesetzt sein. Durch Strangpressen ist der Kühlkörper oder sind die Kühlkörper-Segmente kostengünstig herstellbar.

Bei einer Ausführungsform kann es vorgesehen sein, dass der Kühlkörper eine Vielzahl von Kühlrippen und/oder Kühlkanälen aufweist. Somit kann die Entwärmung der Leistungseinheiten beispielsweise über die Kühlrippen erfolgen, wodurch eine Wärmespreizung erzielt werden kann. Beispielsweise sind die Kühlrippen konzentrisch / "sternförmig" auf einer Mantelfläche eines vorzugsweise im Wesentlichen kreisrund ausgebildeten Stators angeordnet.

Bei einer Ausführungsform kann es vorgesehen sein, dass bei der Kühleinrichtung eine zusätzliche beispielsweise einseitige Kühlung vorgesehen ist. Diese kann beispielsweise in Eckbereichen einer eckigen, beispielsweise achteckigen Außenfläche der Kühleinrichtung angeordnet und beispielsweise als eine Phasenwechselkühlung ausgebildet sein. Die Phasenwechselkühlung kann beispielsweise Wärmerohre oder eine beispielsweise pulsierende Heatpipe umfassen. Dadurch können insbesondere axiale Temperaturgradienten verringert werden. Das Kühlmittel verdampft in der heißeren hinteren Region bzw. vollzieht dort seinen Phasenwechsel.

Bei einer Kühlrippen-Kühleinrichtung, bei welcher die Kühlrippen gruppiert angeordnet sind, wobei jede Kühlrippen-Gruppe einer Facette der eckigen, beispielsweise der achteckigen Außenfläche der Kühleinrichtung zugewiesen ist, kann die Phasenwechselkühlung in den Freiräumen zwischen verschiedenen Kühlrippen-Gruppen angeordnet sein.

Bei einer Ausführungsform kann es vorgesehen sein, dass der Abstand zwischen den und/oder der Querschnitt der Kühlkanäle, die sich unmittelbar an den Bereichen des Kühlkörpers befinden, die zur Entwärmung der Leistungseinheiten vorgesehen sind, unterschiedlich von dem Abstand und/oder dem Querschnitt anderer Kühlkanäle ist, um eine zusätzliche Wärmeabgabe im Bereich der zu kühlenden Leistungseinheiten der Leistungselektronik-Vorrichtung zu ermöglichen. Auch der Abstand zwischen den und/oder die Dicke der Kühlrippen der entsprechenden Teile des Kühlkörpers kann zu diesem Zweck angepasst werden.

Bei einer Ausführungsform kann es vorgesehen sein, dass der Bereich derart ausgebildet ist, dass die Wärme von der - zu kühlenden - Leistungseinheit im Wesentlichen nur über den wärmeleitenden Werkstoff abfließen kann.

Bei einer Ausführungsform kann es vorgesehen sein, dass der Bereich an eine Außenfläche der Kühleinrichtung, vorzugsweise des Kühlkörpers angrenzt und beispielsweise mit der Außenfläche planbündig abschließt. Vorzugsweise grenzen alle Bereiche an die (eine und dieselbe) Außenfläche der Kühleinrichtung und schließen mit dieser planbündig ab. Bei der Außenfläche handelt es sich um die Außenseite der Kühleinrichtung, d.h. um jene Seite, die der elektrischen ab- und der Leistungselektronik-Vorrichtung zugewandt ist.

Bei einer Ausführungsform kann es vorgesehen sein, dass der wärmeleitende Werkstoff monolithisch ist.

Bei einer Ausführungsform kann es vorgesehen sein, dass die Leistungselektronik-Vorrichtung mehrere Leistungshalbleitermodule aufweist, die am Gehäuse azimutal verteilt angeordnet sind. Mit anderen Worten können die Segmente der Leistungselektronik-Vorrichtung - die Leistungshalbleitermodule - in Umfangsrichtung um das Gehäuse, vorzugsweise um den, beispielsweise im Querschnitt im Wesentlichen runden, Stator, der elektrischen rotatorischen Maschine angeordnet sein. Es versteht sich, dass auch die Leistungseinheiten der jeweiligen Leistungshalbleitermodule in Umfangsrichtung um das Gehäuse an dem Außenumfang des Gehäuses angeordnet werden können.

Bei einer Ausführungsform kann es vorgesehen sein, dass das zumindest eine Leistungshalbleitermodul auf dem Bereich planbündig aufliegt.

Bei einer Ausführungsform kann es vorgesehen sein, dass das zumindest eine Leistungshalbleitermodul als Planartechnik-Leistungshalbleitermodul - so genanntes CAP-Modul oder "Kappe" - ausgebildet ist. Unter einem Planartechnik-Modul wird ein durch Planartechnik hergestelltes Modul verstanden. Dadurch kann eine sehr kompakte Bauweise erzielt werden.

Es kann zweckmäßig sein, wenn jede Leistungseinheit (Leistungshalbleitereinheit), z.B. jeder Leistungshalbleiter, insbesondere jeder Transistor, Diode, etc. auf einem Substrat angebracht ist.

Die Leistungseinheiten insbesondere Transistoren können als CAP-Module ausgebildet sein.

Bei einer Ausführungsform kann es vorgesehen sein, dass das Substrat an dem Bereich angeordnet ist.

Bei einer Ausführungsform kann es vorgesehen sein, dass zwischen dem Substrat und dem Bereich eine Werkstoffschicht, beispielsweise eine Metallisierung vorgesehen ist.

Bei einer Ausführungsform kann es vorgesehen sein, dass das Substrat als ein Direct-Copper-Bonded-Verbund ausgebildet ist. Das Leistungshalbleitermodul kann dabei als sogenanntes CAP-Modul oder "Kappe" ausgebildet sein. Eine solche Anordnung kann zu einer Verringerung des thermischen Widerstands und zu einer besseren Wärmeableitung führen.

Direct copper bonded (DCB, auch engl., Direct Bonded Copper, DBC), ist in der Aufbau- und Verbindungstechnik eine Struktur, die eine enge elektrisch/thermische Verbindung elektronischer Bauteile und Chips über Kupfer ermöglicht. Damit können sowohl Hybridschaltkreise mittels Chip- und Drahtbonden als auch Metallkern-Leiterplatten gefertigt werden.

Auf dem DCB-Substrat können aus bzw. auf der Kupferschicht Leiterbahn-Strukturen und Kontaktflächen hergestellt werden, um Bauteile aufzulöten, die so besonders gut gekühlt werden, was bei konventionellen Leiterplatten aufgrund der schlechten Wärmeleitfähigkeit des Substrates nicht erreichbar ist.

Bei einer Ausführungsform kann es vorgesehen sein, dass durch Aufliegen des zumindest einen Leistungshalbleitermoduls auf dem Bereich eine Kontaktfläche definiert ist, deren Größe kleiner oder im Wesentlichen gleich einer dem zumindest einen Leistungshalbleitermodul zugewandten Oberfläche des Bereichs ist.

Bei einer Ausführungsform kann es vorgesehen sein, dass der Bereich einen ersten, vorzugsweise metallischen und einen zweiten vorzugsweise metallischen wärmeleitenden Werkstoff umfasst, wobei der erste wärmeleitende Werkstoff eine niedrigere Wärmeleitfähigkeit als der zweite wärmeleitende Werkstoff aufweist.

Bei einer Ausführungsform kann es vorgesehen sein, dass der Kühlkörper aus dem ersten, vorzugsweise metallischen Werkstoff, beispielsweise aus Aluminium ausgebildet ist.

Bei einer Ausführungsform kann es vorgesehen sein, dass der zweite wärmeleitende Werkstoff Kupfer ist.

Bei einer Ausführungsform kann es vorgesehen sein, dass der Bereich eine Kavität aufweist, die mit dem zweiten wärmeleitenden Werkstoff gefüllt ist. Kavitäten lassen sich mit einem Werkstoff einfach füllen und somit den Herstellungsprozess einfacher gestalten.

Bei einer Ausführungsform kann es vorgesehen sein, dass die Leistungseinheit derart mit dem zweiten wärmeleitenden Werkstoff in thermischem Kontakt ist, dass ein thermischer Kontakt der Leistungseinheit mit dem ersten wärmeleitenden Werkstoff im Wesentlichen nur über den zweiten wärmeleitenden Werkstoff erfolgen kann.

Bei einer Ausführungsform kann es vorgesehen sein, dass der Bereich eine der Anzahl der Leistungseinheiten des zumindest einen Leistungshalbleitermoduls entsprechende, vorzugsweise gleiche Anzahl von voneinander getrennten Zonen aufweist, wobei jede Zone den zweiten wärmeleitenden Werkstoff aufweist und zumindest einer, vorzugsweise genau einer Leistungseinheit zugeordnet ist.

Bei einer Ausführungsform kann es vorgesehen sein, dass die Zonen als Kavitäten ausgebildet sind, vorzugsweise jede Zone als Kavität ausgebildet ist.

Bei einer Ausführungsform kann es vorgesehen sein, dass das zumindest eine Leistungshalbleitermodul mit der Kühleinrichtung stoffschlüssig verbunden ist.

Stoffschlüssige Verbindungen werden alle Verbindungen genannt, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen: Löten, Schweißen, Kleben, Vulkanisieren.

Bei einer Ausführungsform kann es vorgesehen sein, dass das zumindest eine Leistungshalbleitermodul mit dem Kühlkörper, insbesondere mit dem zweiten wärmeleitenden Werkstoff, der in die Kavitäten gefüllt ist, stoffschlüssig verbunden ist. Dies sorgt für eine besonders günstige Wärmespreizung und somit für eine gute Entwärmung der Leistungseinheiten.

Bei einer Ausführungsform kann es vorgesehen sein, dass das jeweilige Substrat, auf dem die entsprechende Leistungsfreiheit angebracht ist, mit dem Kühlkörper, insbesondere mit dem zweiten wärmeleitenden Werkstoff, der in die Kavitäten gefüllt ist, stoffschlüssig verbunden ist.

Bei einer Ausführungsform kann es vorgesehen sein, dass der zweite wärmeleitende Werkstoff eine in der Kühleinrichtung ausgebildete Kavität füllt und vorzugsweise mit einer Außenseite des Gehäuses planbündig abschließt, insbesondere Kupfer-Inlay bildet.

Die Zonen können beispielsweise als Kupfer-Inlays ausgebildet sein.

Bei einer Ausführungsform kann es vorgesehen sein, dass das zumindest eine Leistungshalbleitermodul auf dem zweiten wärmeleitenden Werkstoff planbündig aufliegt.

Bei einer Ausführungsform kann es vorgesehen sein, dass die Leistungselektronik-Vorrichtung eine dem zumindest einen Leistungshalbleitermodul zugeordnete Regelungseinrichtung zum Überwachen und/oder zum Ansteuern des zumindest einen Leistungshalbleitermoduls aufweist.

Die Regelungseinrichtung kann als weiteres Segment der Leistungselektronik-Vorrichtung ausgebildet sein.

Bei einer Ausführungsform kann es vorgesehen sein, dass die Regelungseinrichtung am Außenumfang des Gehäuses angeordnet, vorzugsweise daran befestigt ist.

Bei einer Ausführungsform kann es vorgesehen sein, dass die Regelungseinrichtung jedem Leistungshalbleitermodul mittels einer Leitung verbunden sein kann. Es kann zweckmäßig sein, wenn die Leitung als eine flexible Leiterplatte - Flex-PCB - ausgebildet ist.

Mit anderen Worten können PCBs (Leiterplatten) mit CAPmodules (Leistungshalbleitermodule) z.B. aufgeschraubt werden. Eine Ansteuerplatine der Regelungseinrichtung kann skalierbar mit mehreren PCBs verbunden sein, so dass mit vergleichsweise geringem Aufwand eine Skalierung durch Standardbaugruppen erfolgen kann, was Kosten einspart. Es können mehrere PCBs hintereinander - vorzugsweise hintereinander in Axialrichtung des Kühlkörpers bzw. der elektrischen rotatorischen Maschine - angeordnet werden.

Es ist auch denkbar, die Leistungshalbleitermodul in Axialrichtung gesehen nebeneinander anzuordnen. Dadurch ist keines der Leistungshalbleitermodule im "Kühlmediumschatten" des anderen - beide werden gleichzeitig von einer Kühlmediumfront gekühlt. Die Kühlung kann dadurch verbessert werden.

Bei einer Ausführungsform kann es vorgesehen sein, dass jedes Leistungshalbleitermodul zwei oder mehr, beispielsweise vier Leistungseinheiten umfasst, welche am Außenumfang des Gehäuses angeordnet vorzugsweise daran befestigt sind.

Bei einer Ausführungsform kann es vorgesehen sein, dass die Leistungseinheiten, vorzugsweise jede - im Betrieb der Leistungselektronik-Vorrichtung zu kühlende - Leistungseinheit über zumindest eine beispielsweise als ein Pin ausgebildete Durchkontaktierung mit einer vorzugsweise gemeinsamen Leiterplatte verbunden sind. Die Durchkontaktierungen sind beispielsweise zum Anschließen an die Regelungseinrichtung vorgesehen. Die Anbindung an die Bildungseinrichtung kann beispielsweise über eine Anbindung der Durchkontaktierungen an die jeweiligen Leiterbahnen der Leiterplatte erfolgen.

Bei einer Ausführungsform kann es vorgesehen sein, dass die Leiterplatte mehrere (nicht flexible) Leiterplattensegmente aufweist.

Bei einer Ausführungsform kann es vorgesehen sein, dass die Leiterplatte zumindest einen flexiblen Abschnitt aufweist, um das Gehäuse zumindest teilweise zu umschließen. Zwei nicht flexible Leiterplattensegmente können mit einem flexiblen Abschnitt verbunden sein.

Bei einer Ausführungsform kann es vorgesehen sein, dass die flexiblen Abschnitte der Leiterplatte mittels einer Steckverbindung mit den Leiterplattensegmenten verbunden sind.

Dies ermöglicht eine flexiblere Skalierung der Leistungselektronik-Vorrichtung.

Die Leiterplatte kann beispielsweise als ein Treiber (engl.: Driver) ausgebildet sein. In der Elektronik ist ein Treiber ein Schaltkreis oder eine Komponente, die zur Steuerung eines anderen Schaltkreises oder einer anderen Komponente verwendet werden kann, z. B. eines Hochleistungstransistors.

Treiber werden in der Regel verwendet, um den durch eine Schaltung fließenden Strom zu regulieren oder um andere Faktoren wie andere Komponenten oder Geräte in der Schaltung zu steuern.

Mit anderen Worten können Ansteuer- bzw. Power-Boards, die z.B. durch (gesteckte) Flex-PCBs / flexible Teile der PCBs verbunden sein, um das Gehäuse zu umschließen. Mittels Durchkontaktierungen, z.B. über Pins, können die Ansteuer- bzw. Power-Boards mit den DCBs (mit den Leistungseinheiten, z.B. mit den Transistoren, Dioden, etc.) verbunden werden.

Bei einer Ausführungsform kann es vorgesehen sein, dass die Leistungselektronik-Vorrichtung das Gehäuse in - in Bezug auf die Welle der elektrischen rotatorischen Maschine - azimutaler Richtung umschließt.

Bei einer Ausführungsform kann es vorgesehen sein, dass die Leistungselektronik-Vorrichtung in Axialrichtung der elektrischen rotatorischen Maschine eine Ausdehnung aufweist, die kleiner oder gleich als ein Drittel einer axialen Größe der elektrischen rotatorischen Maschine beträgt.

Bei einer Ausführungsform kann es vorgesehen sein, dass der Stromrichter an jenem Ende der elektrischen rotatorischen Maschine angebracht ist, an dem ein Lüfter angeordnet ist. Dies kann hinsichtlich einer Fokussierung der Kühlmittelströmung vorteilhaft (wenn der Umrichter nahe am Lüfter "sitzt").

Bei einer Ausführungsform kann es vorgesehen sein, dass die elektrische rotatorische Maschine eine, zwei, drei, vier, sechs, acht, zehn oder zwölf Polpaare aufweist.

Bei einer Ausführungsform kann es vorgesehen sein, dass die Anzahl der Leistungshalbleitermodule der Anzahl der Polpaare korrespondiert.

Bei einer Ausführungsform kann es vorgesehen sein, dass die Leistungselektronik-Vorrichtung als ein Stromrichter, als ein Umrichter, als ein Frequenzumrichter, oder als ein Wechselrichter ausgebildet ist.

Bei einer Ausführungsform kann es vorgesehen sein, dass die Kühleinrichtung dazu ausgebildet ist, ein Kühlmedium, beispielsweise gasförmiges, z.B. Luft, oder flüssiges, z.B. Kühlflüssigkeit, Kühlmedium aufzunehmen und in sich zirkulieren zu lassen, vorzugsweise ohne das Kühlmedium aus der Kühleinrichtung hinausgelangen zu lassen.

Bei einer Ausführungsform kann es vorgesehen sein, dass die Leistungselektronik-Vorrichtung ein Leistungselektronik-Vorrichtung-Gehäuse, beispielsweise aus Plastik aufweist.

Die Aufgabe wird außerdem mit einem eingangs genannten digitalen Zwilling erfindungsgemäß dadurch gelöst, dass der digitale Zwilling dazu konfiguriert ist, Kühlung der Leistungseinheit, beispielsweise während des Betriebs der elektrischen Antriebsvorrichtung, zu simulieren.

Bei einer Ausführungsform kann es vorgesehen sein, dass der Simulationsvorgangs Schritte aufweist:
- Laden der Konstruktionsdaten der Antriebsvorrichtung;
- Ermitteln und/oder Vorgeben der die Kühlung festlegenden Parameter und/oder Größen (z.B. Art des Kühlmediums, Geschwindigkeit des Durchflusses);
- Ermitteln und/oder Vorgeben der den Betrieb der elektrischen rotatorischen Maschine bestimmenden Parameter und/oder Größen,
- Durchführen der Simulation.

Die Ergebnisse der Simulation kann beispielsweise dazu verwendet werden eine optimale Anordnung der Leistungseinheiten am Außenumfang des Gehäuses der elektrischen rotatorischen Maschinen zu bestimmen.

Der digitale Zwilling kann beispielsweise als eine Simulationssoftware ausgebildet sein, die beispielsweise Konstruktionsdaten der elektrischen Antriebsvorrichtung, beispielsweise in Form von CAD-Daten umfasst oder auf diese zwecks Simulation (fortlaufend) zugreifen kann.

Bei einer Ausführungsform kann es vorgesehen sein, dass der digitale Zwilling ein oder mehrere Betriebsverhaltensmodelle der elektrischen rotatorischen Maschine und der Leistungselektronik-Vorrichtung umfasst, wie z.B. Physikmodelle, Temperaturmodelle, etc., mit welchen der Betrieb der elektronischen Antriebsvorrichtung, vorzugsweise unter unterschiedlichen Bedingungen (Belastung, Drehmoment, Strom, etc.) simuliert werden kann.

Der digitale Zwilling kann eine oder mehr Schnittstellen vorsehen, beispielsweise Benutzerschnittstellen für Ein-/Ausgabe der Information und/oder Schnittstellen über welche eine andere Software, beispielsweise Software-Module an den digitalen Zwilling gekoppelt werden können und mit dem digitalen Zwilling Informationen austauschen können. Es ist beispielsweise denkbar, ein Umgebungs-Modul an den digitalen Zwilling anzukoppeln, damit Außeneinflüsse auf die Kühlung der elektrischen Antriebsvorrichtung und insbesondere der Leistungseinheiten untersucht werden können.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: eine elektrische Antriebsvorrichtung,
- FIG 2: eine erste Ausführungsform einer elektronischen An-triebsvorrichtung im Querschnitt,
- FIG 3: eine zweite Ausführungsform einer elektronischen An-triebsvorrichtung im Querschnitt
- FIG 4: eine Draufsicht auf einen Stromrichter der FIG 3, und
- FIG 5: einen digitalen Zwilling.

In den Ausführungsbeispielen und Figuren können gleiche oder gleich wirkende Elemente jeweils mit den gleichen Bezugszeichen versehen sein.

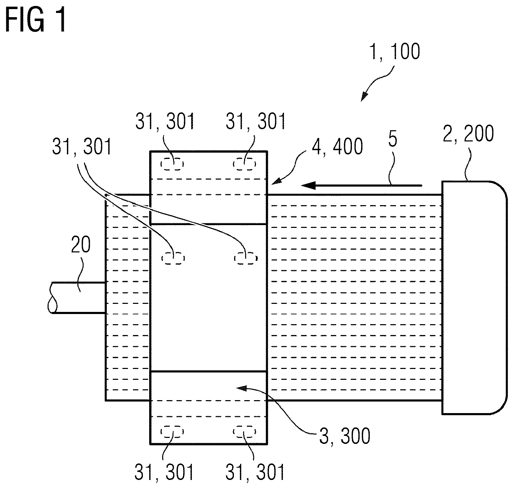

FIG 1 zeigt schematisch eine elektrische Antriebsvorrichtung 1, 100. Die Antriebsvorrichtung weist einen Elektromotor 2, 200, einen Stromrichter 3, 300 und eine Kühleinrichtung 4, 400 auf.

Der Stromrichter 3, 300 ist direkt an dem Gehäuse des Elektromotors 2, 200 angebracht, um die Antriebsvorrichtung kompakter zu gestalten.

Der Stromrichter 3, 300 ist segmentiert, d.h. er weist ein oder mehrere Leistungshalbleitermodule - Stromrichtermodule 31, 301, die am Außenumfang des Gehäuses verteilt angeordnet sind. Die Stromrichtermodule 31, 301 können beispielsweise in Azimutalrichtung - um die Welle 20 des Elektromotors 2, 200 herum - an seinem Gehäuse verteilt angeordnet sein.

Die Stromrichtermodule 31, 301 sind zum Schalten eines elektrischen Stromes zur Versorgung des Elektromotors 2, 200 vorgesehen.

Die Kühleinrichtung 4, 400 ist zum unmittelbaren Kühlen des Elektromotors 2, 200 ausgebildet. Um eine kompakte Bauweise zu erzielen, ist die Kühleinrichtung 4, 400 in das Gehäuse des Elektromotors 2, 200 vorzugsweise vollständig integriert.

Als Kühlmedium kann beispielsweise Luft oder eine Kühlflüssigkeit dienen. FIG 1 zeigt ein Beispiel, bei welchem ein Luftstrom 5, der von einem Lüfter des Elektromotors 2, 200 erzeugt wird, zu Kühlung des Elektromotors 2, 200 und auch des Stromrichters 3, 300 verwendet wird.

Die Kühleinrichtung 4, 400 ist somit zum unmittelbaren Kühlen der Stromrichtermodule 31, 301 ausgebildet.

FIG 1 lässt erkennen, dass die Stromrichtermodule 31, 301 derart am Gehäuseumfang des Elektromotors 2, 200 angeordnet sind, dass der Stromrichter 3,300 in Axialrichtung des Elektromotors 2, 200 eine Ausdehnung aufweist, die kleiner oder gleich als ein Drittel seiner axialen Größe beträgt.

Es kann auch denkbar sein, dass der Stromrichter an jenem Ende des Elektromotors angebracht ist, an dem der Lüfter angeordnet ist - mit anderen Worten an einem anderen Ende, als es in FIG 1 gezeigt ist. Dies kann hinsichtlich einer Fokussierung der Kühlmittelströmung vorteilhaft (wenn der Umrichter nahe am Lüfter "sitzt").

Vorzugsweise sind die Stromrichtermodule 31, 301 als Planartechnik-Leistungshalbleitermodule, insbesondere als Insula-ted-Gate-Bipolar-Transistor(IBGT)-Planartechnik-Module ausgebildet sind. Unter einem Planartechnik-Modul wird ein durch Planartechnik hergestelltes Modul verstanden. Dadurch wird die radiale Größe des Elektromotors 2, 200 nur minimal erhöht und eine kompakte Bauweise erzielt.

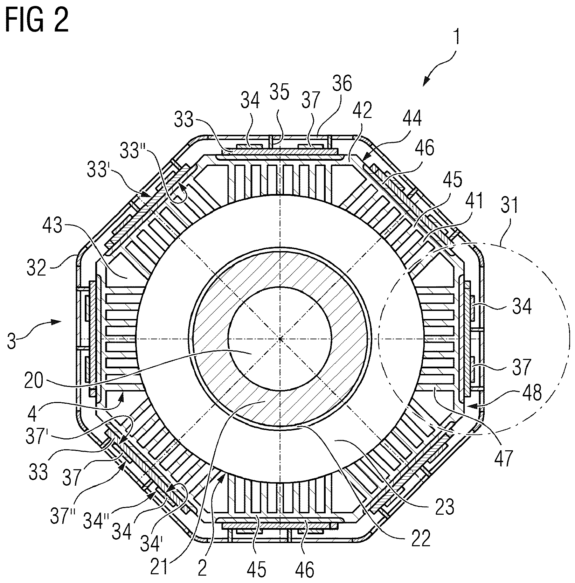

FIG 2 zeigt eine Ausführungsform der elektrischen Antriebsvorrichtung 1 im Querschnitt. Die gezeigte Schnittebene verläuft im Wesentlichen orthogonal zu der Welle (Getriebe) 20 des Elektromotors 2 durch den Elektromotor 2 und den Stromrichter 3.

Der Elektromotor 2 weist, wie üblich, einen Rotor 21, der beispielsweise als eine Hohlwelle ausgebildet sein kann, und einen (im Querschnitt runden) Stator 23 auf, wobei zwischen dem Rotor 21 und im Stator 23 ein Luftspalt 22 vorgesehen ist.

Die Kühleinrichtung 4 kann als Gehäuse, beispielsweise als Statorgehäuse ausgebildet sein. Das Statorgehäuse ist vorzugsweise mit dem Stator einstückig ausgebildet.

Die Kühleinrichtung 4 kann eine Mehrzahl an Kühlrippen 41 aufweisen, die in radiale Richtung herausragen.

FIG 2 lässt erkennen, dass die, vorzugsweise alle, Kühlrippen 41 auf der dem Stator 23 abgewandten Seite in einem für alle Kühlrippen 41 gemeinsamen Kühlkörper-Teil 42 enden. Die Kühlrippen 41 und der gemeinsame Kühlkörper-Teil 42 können aus einem metallischen Werkstoff, z.B. aus Aluminium ausgebildet sein.

Die Kühlrippen 41 und der gemeinsame Kühlkörper-Teil 42 definieren einen Raum, durch den das Kühlmedium 43, beispielsweise Luft hindurchfließen kann.

FIG 2 ist zu entnehmen, dass der Kühlkörper-Teil 42 derart ausgebildet sein kann, dass er den Elektromotor 2 in azimutaler Richtung vollständig umschließt. Hierdurch kann der Stromrichter 3 den Elektromotor 2 in azimutaler Richtung ebenfalls vollständig umschließen.

Dies ermöglicht das Anbringen mehrerer, z.B., wie in FIG 2 gezeigt, acht Stromrichtermodule 31 gleichzeitig an der Kühleinrichtung 4. Für Elektromotoren mit einer hohen Polpaarzahl - sechs, acht, zehn oder zwölf - besonders vorteilhaft sein, weil bei solchen Elektromotoren die Zahl der Stromrichtermodule 31 der Zahl der Polpaare korrespondieren soll.

Es sei an dieser Stelle angemerkt, dass der Kühlkörper-Teil derart ausgebildet sein kann, dass er den Elektromotor in azimutaler Richtung nur teilweise umschließt, sodass der Stromrichter den Elektromotor auch nur teilweise umschließen kann.

Denkbar aber auch, dass der Kühlkörper-Teil den Elektromotor in azimutaler Richtung vollständig umschließt, jedoch der Stromrichter derart an der Kühleinrichtung angeordnet ist, dass er den Elektromotor nur teilweise umschließt.

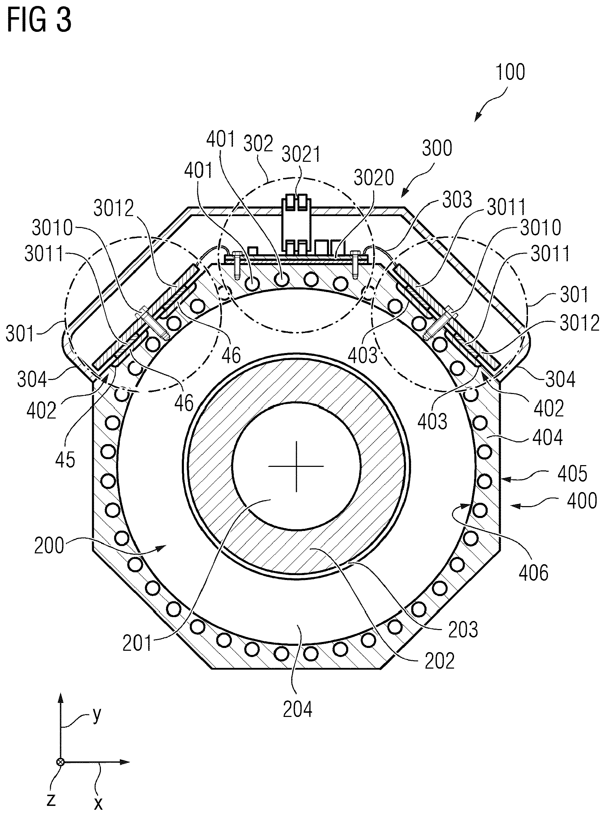

Eine beispielhafte Ausführungsform, gemäß welcher der Stromrichter den Elektromotor in azimutaler Richtung nur teilweise umschließt, ist in FIG 3 veranschaulicht.

Zurückkehrend zu FIG 2 ist des Weiteren anzumerken, dass die Kühlrippen 41 gruppiert sein können, wobei jede Gruppe der Kühlrippen genau einem Stromrichtermodul 31 zugeordnet sein kann und umgekehrt: jedem Stromrichtermodul 31 kann genau eine Kühlrippen-Gruppe zugeordnet sein.

Stator-Mantelfläche ist in FIG 2 im Wesentlichen rund, Substrate 33 sind eben. Die Kühlrippen 41 sind konzentrisch / "sternförmig" auf der Stator-Mantelfläche angeordnet. Die Kühlrippen 41 der jeweiligen Kühlrippen-Gruppe stehen senkrecht zum ebenen Substrat 33. Hierdurch ergibt sich eine bessere Entwärmung des entsprechenden Leistungshalbleitermoduls 31 und des Umrichters 3.

FIG 2 lässt erkennen, dass jedes Stromrichtermodul 31 zwei Leistungseinheiten 34 und 37 umfasst. Die erste Leistungseinheit 34 kann beispielsweise als Transistor, insbesondere als IGBT, als Metalloxide-Semiconductor-Field-Effect-Transistor (MOSFET) oder als Feldeffekttransistor ausgeführt sein. Die zweite Leistungseinheit 37 kann der ersten Leistungseinheit 34 zugewiesen, insbesondere antiparallel zugewiesen und beispielsweise als eine Diode ausgeführt sein.

Die Leistungseinheiten 34 und 37 müssen im Betrieb der Antriebsvorrichtung 1 und des Stromrichters 3 gekühlt werden.

Hierfür weist die Kühleinrichtung 4, insbesondere der Kühlkörper-Teil 42, für jede - im Betrieb des Stromrichters 3 zu kühlende - Leistungseinheit 34, 37 des entsprechenden Stromrichtermoduls 31 einen dieser Leistungseinheit 34, 37 zugeordneten Bereich 44 auf.

Der Bereich 44 ist vorzugsweise ein zusammenhängender Bereich, insbesondere ein einfach zusammenhängender Bereich. Dies bedeutet beispielsweise, dass der Bereich 44 nicht in Form von zwei oder mehr disjunkten, einander nicht angrenzenden Teilbereichen vorliegen darf. Insbesondere ist der Bereich 44 ein (einfach) zusammenhängender Bereich des Kühlkörpers 47.

Die (zu kühlende) Leistungseinheit 34, 37 steht mit dem Bereich 44 in thermischem Kontakt. Der Bereich 44 umfasst zumindest einen wärmeleitenden, beispielsweise metallischen Werkstoff 45, 46, der zum Ableiten der Wärme von der Leistungseinheit 34, 37 vorgesehen ist.

Der Bereich 44 kann derart ausgebildet sein, dass die Wärme von der entsprechenden Leistungseinheit 34, 37 im Wesentlichen nur über den in dem Bereich 44 enthaltenen wärmeleitenden Werkstoff 45, 46 abfließen kann.

Der Abstand zwischen den Kühlrippen 41 und/oder die Dicke der Kühlrippen 41 der entsprechenden Teile des Kühlkörpers 47 kann zur Verbesserung der Entwärmung innerhalb des Bereichs 44, vorzugsweise innerhalb aller Bereiche 44 variiert werden. Insbesondere können die Kühlrippen 41, die unmittelbar an die Bereiche 44 angrenzen, einen anderen Abstand untereinander haben und/oder eine andere Dicke aufweisen als die Kühlrippen abseits (nicht innerhalb) der zur Entwärmung der Leistungseinheiten 34, 37 vorgesehenen Bereiche 44 liegen.

FIG 2 lässt erkennen, dass der Bereich 44 einen ersten wärmeleitenden Werkstoff 45 und einen zweiten wärmeleitenden Werkstoff 46 umfasst, wobei der erste wärmeleitende Werkstoff 45, z.B. Aluminium, eine niedrigere Wärmeleitfähigkeit als der zweite wärmeleitende Werkstoff 46 aufweist.

Vorzugsweise ist der zweite wärmeleitende Werkstoff 46 Kupfer.

Der zweite wärmeleitende Werkstoff 46 füllt vorzugsweise einen (einfach zusammenhängenden) Teilbereich des Bereichs 44 aus und bildet einen sogenannten Kupfer-Inlay.

Dieser Teilbereich des Bereichs 44 kann beispielsweise als eine Kavität ausgebildet sein. Die Kavitäten lassen sich mit dem zweiten wärmeleitenden Werkstoff 46 einfacher füllen.

Die Leistungseinheiten 34, 37 von jedem Stromrichtermodul 31 können auf einem Substrat 33 angebracht sein, welches an dem Bereich 44 angeordnet und beispielsweise mit zumindest einem der wärmeleitenden Werkstoffe 45, 46, vorzugsweise mit dem zweiten wärmeleitenden Werkstoff 46 stoffschlüssig verbunden ist.

Die stoffschlüssige Verbindung der jeweiligen Substrate 33 zum wärmeleitenden Werkstoff 45, 46 enthaltenden Bereich kann durch Löten oder Sintern hergestellt werden. Unter einer unmittelbar stoffschlüssigen Kontaktierung ist eine direkte Kontaktierung zu verstehen, die Verbindungsmittel zur Herstellung der stoffschlüssigen Verbindung wie Kleber, Lötzinn, Sinterpaste, ... einschließt. Ein zusätzliches Verbindungselement wie ein zusätzlicher Leiter, ein Bonddraht, ein Abstandshalter, eine Bodenplatte, Wärmeleitpaste, ... ist dabei für die Verbindung der Substrate 33 mit der Kühleinrichtung 4 nicht notwendig.

Das Substrat 33 kann beispielsweise als eine DCB-Schicht bzw. -Substrat ausgeführt sein, wodurch die thermische Anbindung der Leistungseinheiten 34, 37 an die Kühleinrichtung 4 weiter verbessert werden kann.

Das beispielsweise als DCB-Schicht ausgebildete Substrat 33 kann mehrere Lagen umfassen. Das Substrat 33 kann beispielsweise eine dielektrische Materiallage (nicht gezeigt) aufweisen, die einen keramischen Werkstoff, beispielsweise Aluminiumnitrid oder Aluminiumoxid, oder einen organischen Werkstoff, beispielsweise einem Polyamid enthält. Die dielektrische Materiallage kann eine Dicke von 25 µm bis 400 µm, insbesondere 50 µm bis 250 µm, aufweisen. Darüber hinaus können die Substrate 33 jeweils auf einer den Leistungseinheiten 34, 37 zugewandten Seite 33' eine, insbesondere strukturierte, obere Metallisierung (nicht gezeigt) und auf einer den Leistungseinheiten 34, 37 abgewandten Seite 33" eine untere Metallisierung (nicht gezeigt) aufweisen.

Die obere Metallisierung und die untere Metallisierung können beispielsweise aus Kupfer hergestellt sein.

Eine dem Substrat 33 zugewandte Seite 34', 37' der Leistungshalbleiter 34, 37 kann jeweils ebenfalls über eine stoffschlüssige Verbindung, die durch Löten oder Sintern hergestellt werden kann, mit der oberen Metallisierung des Substrats 33 verbunden sein. Eine dem Substrat 33 abgewandte Seite 34", 37" der Leistungseinheiten 34, 37 kann jeweils über eine Bondverbindung (nicht gezeigt) mit der oberen Metallisierung des Substrats 33 verbunden sein. Die Bondverbindung kann beispielsweise mindestens einen Bonddraht, mindestens einen Ribbon-Bond und/oder andere Mittel zur Herstellung einer Bondverbindung umfasst.

FIG 2 ist weiterhin zu entnehmen, dass jede Leistungseinheit 34, 37 mit dem zweiten wärmeleitenden Werkstoff 46 derart in thermischem Kontakt stehen kann, dass ein thermischer Kontakt dieser Leistungseinheit 34, 37 mit dem ersten wärmeleitenden Werkstoff 45 im Wesentlichen nur über den zweiten wärmeleitenden Werkstoff 46 erfolgen kann.

Mit anderen Worten kann die Kühleinrichtung 4 einen Kühlkörper 47 aufweisen. Der Kühlkörper 47 ist aus einem (ersten) wärmeleitenden, vorzugsweise metallischen Werkstoff 45 hergestellt. Auf seiner äußeren Oberfläche 48 können Kavitäten eingebracht sein, die mit einem (zweiten) wärmeleitenden, vorzugsweise metallischen Werkstoff 46 gefüllt sind, wobei der zweite metallische Werkstoff 46 eine höhere Wärmeleitfähigkeit als der erste metallische Werkstoff 45 aufweist. Beispielsweise ist der erste metallische Werkstoff 45 Aluminium und der zweite metallische Werkstoff 46 Kupfer. Jedem der Stromrichtermodule 31 kann eine mit dem zweiten metallischen Werkstoff 46 gefüllte Kavität zugewiesen sein, wobei der zweite metallische Werkstoff 46 im Wesentlichen planbündig mit der Oberfläche 48 des Kühlkörpers 47 abschließt und die unteren Metallisierungen (nicht gezeigt) des jeweiligen Substrats 33 stoffschlüssig mit dem zweiten metallischen Werkstoff 46 verbunden sind. Insbesondere ist der zweite metallische Werkstoff 46 mittels eines additiven Verfahrens, beispielsweise mittels Kaltgasspritzen, in die Kavitäten eingebracht. Jedem der Stromrichtermodule 31 kann ein dedizierter Sensor, insbesondere Temperatursensor, zugewiesen sein, um die Temperatur der Leistungshalbleitereinheiten 34, 37 zu überwachen.

Der Stromrichter 3 kann weiterhin eine Leiterplatte 36 umfassen, die die Kühleinrichtung 4 und somit auch den Elektromotor 2 in Umfangsrichtung umschließt.

Dabei können die Leistungseinheiten 34, 37 über zumindest eine Durchkontaktierung 35 mit der, beispielsweise für alle Stromrichtermodule 31 gemeinsamen - Leiterplatte 36 verbunden sind. Die Durchkontaktierungen 35 können beispielsweise als Pins ausgebildet sein.

Um ein einfaches Umschließen des Elektromotors 2 durch den Stromrichter zu ermöglichen, kann die Leiterplatte 36 flexible Abschnitte 32 aufweisen.

Die Durchkontaktierungen 35 sind dazu vorgesehen, die Stromrichtermodule 31, insbesondere die Leistungshalbleitereinheiten 34, 37 an eine (hier nicht gezeigte) Regelungseinrichtung anzuschließen.

Beispielsweise kann die Regelungseinrichtung als die Leiterplatte 36 ausgebildet sein.

FIG 3 zeigt eine weitere Ausführungsform der Antriebsvorrichtung im Querschnitt.

Nachstehend soll insbesondere auf die Unterschiede der in der FIG 3 gezeigten Antriebsvorrichtung 100 und der in der FIG 2 veranschaulichten Antriebsvorrichtung 1 eingegangen werden, wobei bezüglich gleichbleibender Bauteile, Merkmale und Funktionen auf die Beschreibung des Ausführungsbeispiels in der FIG 2 verwiesen wird. Im Wesentlichen gleichbleibende Bauteile, Merkmale und Funktionen sind grundsätzlich mit den gleichen Bezugszeichen beziffert.

Die Antriebsvorrichtung 100 umfasst einen Elektromotor 200, eine Stromrichter 300, und eine Kühleinrichtung 400.

Die Kühleinrichtung 400 ist in das Gehäuse des Elektromotors 200 integriert und zum unmittelbaren Kühlen sowohl des Stromrichters 300 als auch des Elektromotors 200 eingerichtet ist. Hierzu weist die Kühleinrichtung 400 eine Vielzahl von innerhalb eines Kühlkörpers 404 der Kühleinrichtung 400 verlaufenden Kühlkanälen 401. die Kühlkanäle 401 können dazu ausgebildet sein, ein Kühlmedium, beispielsweise eine Kühlflüssigkeit oder Luft aufzunehmen. Alle Kühlkanäle 401 können miteinander verbunden sein, sodass das gleiche Kühlmedium durch alle Kühlkanäle 401 fließen kann.

Der Kühlkörper 404 kann den Elektromotor 200 umschließen, um dessen gleichmäßige Kühlung zu gewährleisten (so kann der Kühlkörper 47 auch den Elektromotor 2 ebenfalls umschließen, siehe FIG 2).

Der Kühlkörper 404 weist eine Außenseite 405, die dem Stator 204 des Elektromotors 200 abgewandt ist, und eine Innenseite 406, die dem Stator 204 des Elektromotors 200 zugewandt ist.

Der Elektromotor 200 weist außerdem eine Welle 201, einen Rotor 202 auf, wobei zwischen dem Rotor 202 und im Stator 204 ein Luftspalt 203 vorgesehen ist.

Denkbar ist, dass die Kühleinrichtung 400 als ein Statorgehäuse ausgebildet ist bzw. in dieses integriert ist.

Die Außenseite 405 ist vorzugsweise durchgehend oder monolithisch ausgebildet. Insbesondere umschließt die Außenseite 405 des Kühlkörpers 404 in azimutaler Richtung den gesamten Stator 204 des Elektromotors 200.

Beispielsweise weist die Außenseite 405 des Kühlkörpers 404 mehrere Facetten auf.

Bei dem Stromrichter 300 handelt es sich - wie bei dem Stromrichter 3 der FIG 2 - um einen segmentierten Stromrichter.

Insbesondere kann der Stromrichter 300 zwei Leistungshalbleitermodule 301 aufweisen. Denkbar ist auch, dass der Stromrichter 300 mehr als zwei Leistungshalbleitermodule 301 aufweist.

Jedes Leistungshalbleitermodul 301 kann ein Printed-Circle-Board-Package (PCB-Package) 3012 umfassen.

Darüber hinaus kann jedes Leistungshalbleitermodul 301 beispielsweise zwei Leistungshalbleitereinheiten 3011 umfassen. Diese Leistungshalbleitereinheiten 3011 können beispielsweise als Leistungseinheiten 34,37 auf einem entsprechenden Substrat 33 - also beispielsweise als Halbleiterelemente auf einem Chip-Keramik-Verbund - der FIG 2 ausgebildet sein.

Um einen besseren Halt zu bieten, können die Leistungshalbleitermodule 301 an dem Kühlkörper 404 mit einem Befestigungsmittel 3010, beispielsweise mit einer Schraube oder mit einem Niet kraftschlüssig befestigt sein.

Die Leistungshalbleitermodule 301 können beispielsweise an unterschiedlichen einander nicht angrenzenden Facetten des Kühlkörpers 404 angebracht sein.

Der Kühlkörper 404 kann aus einem ersten wärmeleitenden, vorzugsweise metallischen Werkstoff 45 ausgebildet sein.

Darüber hinaus können bei dem Kühlkörper 404 mehrere Bereiche 402 zur thermischen Anbindung der Leistungshalbleitereinheiten 3011 an den Kühlkörper 404 vorgesehen sein.

Der Abstand zwischen den Kühlkanälen 401 und/oder der Querschnitt der Kühlkanäle 401, die sich unmittelbar an den Bereichen 402 des Kühlkörpers 404 befinden können unterschiedlich von dem Abstand zwischen den Kühlkanälen und/oder dem Querschnitt der Kühlkanäle sein, die abseits (nicht innerhalb) der zur Entwärmung der Leistungseinheiten 3011 vorgesehenen Bereiche liegen.

Dies kann vorteilhaft sein, um eine zusätzliche Wärmeabgabe im Bereich der zu kühlenden Leistungseinheiten 3011 der Leistungselektronik-Vorrichtung zu ermöglichen.

Die Bereiche 402 können beispielsweise als Kavitäten bzw. Ausnehmungen ausgebildete Zonen 403 aufweisen, die mit einem zweiten wärmeleitenden, vorzugsweise metallischen Werkstoff 46 gefüllt sind. Insbesondere schließt der zweite wärmeleitende Werkstoff 46 im Wesentlichen planbündig mit der Außenseite 405 des Kühlkörpers ab. Die mit dem zweiten wärmeleitenden Werkstoff 46 befüllten Zonen 403 können also als sogenannter Kupfer-Inlays ausgebildet sein.

FIG 3 lässt erkennen, dass die Anzahl der Zonen 403 der Anzahl der Leistungshalbleitereinheiten 3011 gleich sein kann, sodass jeder Zone 403 nur eine Leistungshalbleitereinheiten 3011 zugewiesen ist und umgekehrt, jeder Leistungshalbleitereinheiten 3011 nur eine Zone 403 zugewiesen ist.

Insbesondere kann vorgesehen sein, dass sich die Zonen 403 nicht überlappen.

Wie bereits im Zusammenhang mit der Ausführungsform der FIG 2 erörtert, leitet der zweite wärmeleitende Werkstoff 46 mit Vorzug die Wärme besser als der erste wärmeleitende Werkstoff 45. Der zweite wärmeleitende Werkstoff 46 ist vorzugsweise Kupfer. Der erste wärmeleitende Werkstoff 45 ist vorzugsweise Aluminium.

Der Stromrichter 300 kann außerdem eine Regelungseinrichtung 302 umfassen. Die Regelungseinrichtung 302 ist den beiden Leistungshalbleitermodulen 301 zugewiesen und zu deren Überwachung und/oder Ansteuerung vorgesehen.

Die Regelungseinrichtung 302 kann an der Außenseite 405 des Kühlkörpers 404 angebracht, vorzugsweise kraftschlüssig, beispielsweise mit einer oder mehreren Schrauben und/oder Nieten befestigt sein.

Die Regelungseinrichtung 302 kann mit jedem Leistungshalbleitermodul 301 mittels einer Leitung 303 verbunden sein. Die Leitung 303 kann beispielsweise als eine flexible Leiterplatte - Flex-PCB - ausgebildet sein.

Die Regelungseinrichtung 302 kann mit Vorzug an eine Facette des Kühlkörpers 404 befestigt sein, zwischen den Facetten liegt, an welchen die Leistungshalbleitermodule 301 angebracht sind.

Die Regelungseinrichtung 302 kann eine Ansteuerungsplatine 3020 und ein in Form eines Steckers ausgebildetes Verbindungselement 3021 aufweisen, welches von der Ansteuerungsplatine 3020 vorspringt und über ein Stromrichtergehäuse 304 hinausragt, beispielsweise um das Anschließen des Stromrichters 300 an eine weitere hier nicht gezeigte Steuerungseinrichtung zu ermöglichen.

Außerdem kann bei der Kühleinrichtung 4, 400 der FIG 2 oder 3 eine zusätzliche beispielsweise einseitige Kühlung vorgesehen sein. Diese kann beispielsweise in Eckbereichen der eckigen, beispielsweise achteckigen Außenfläche der Kühleinrichtung 4, 400 angeordnet und beispielsweise als eine Phasenwechselkühlung ausgebildet sein. Die Phasenwechselkühlung kann beispielsweise Wärmerohre oder eine beispielsweise pulsierende Heatipe umfassen. Dadurch können insbesondere axiale Temperaturgradienten verringert werden. Das Kühlmittel verdampft in der heißeren hinteren Region bzw. vollzieht dort seinen Phasenwechsel. Bei der Kühlrippen-Kühleinrichtung 4 kann die Phasenwechselkühlung in den Freiräumen zwischen den Kühlrippen-Gruppen angeordnet sein.

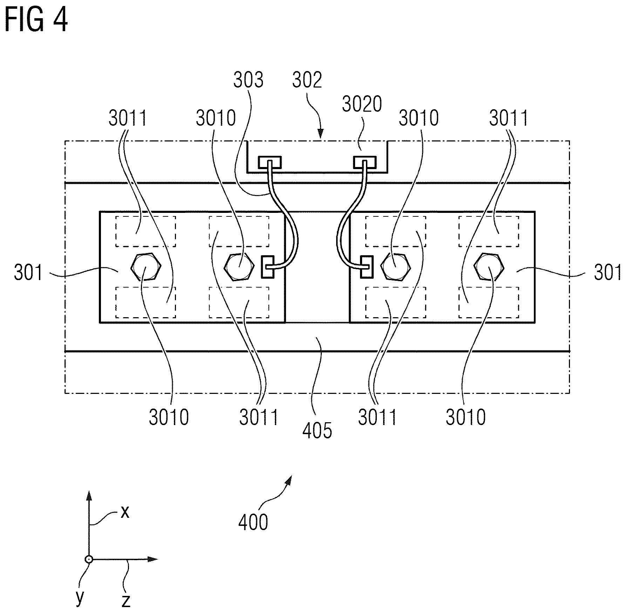

FIG 4 zeigt eine weitere Anordnungsmöglichkeit des Stromrichters 300 an der Kühleinrichtung 400.

FIG 4 lässt erkennen, dass die Leistungshalbleitermodule 301 an einer und derselben Facette an der Außenseite 405 des Kühlkörpers 104 der Kühleinrichtung 400 angebracht sein können.

FIG 4 ist zu entnehmen, dass die Leistungshalbleitermodul in Axialrichtung Z des Elektromotors 2, 200 gesehen hintereinander positioniert sind.

Es ist auch denkbar, die Leistungshalbleitermodul in Axialrichtung gesehen nebeneinander - also in y-Richtung gesehen - hintereinander - anzuordnen. Dadurch ist keines der Leistungshalbleitermodule 301 im "Kühlmediumschatten" des anderen - beide werden gleichzeitig von einer Kühlmediumfront gekühlt. Die Kühlung kann dadurch verbessert werden.

Zur Befestigung des jeweiligen Leistungshalbleitermoduls 301 sind zwei Schrauben 3010 vorgesehen.

Jedes Leistungshalbleitermodul 301 weist vier Leistungseinheiten 3011 auf und ist über die jeweilige Verbindung mit der Ansteuerungsplatine 3020 der Regelungseinrichtung 302 verbunden.

Der FIG 4 ist zu entnehmen, dass die Regelungseinrichtung 302 an einer anderen, beispielsweise an die die Leistungshalbleitermodule 301 tragende Facette angrenzenden Facette des Kühlkörpers angebracht sein kann.

Das Kühlmedium fließt beispielsweise in Z-Richtung.

Es wird verstanden, dass die Ausführungsformen der FIG 2 und FIG 3 sich nicht gegenseitig ausschließen, sondern vervollständigen. Merkmale der Antriebsvorrichtung 1 der FIG 2 können bei der Antriebsvorrichtung 100 der FIG 3 durchaus zum Einsatz kommen und *vica versa.* Beispielsweise ist es denkbar, die Kühleinrichtung 400, die Kühlkanäle 401 aufweist, durch die Kühleinrichtung 4 mit einer Mehrzahl an Kühlrippen 41 auszutauschen und umgekehrt. Darüber hinaus ist kein Stromrichtergehäuse des Stromrichters 3 der Antriebsvorrichtung 1 der FIG 2 explizit gezeigt. Allerdings ist es denkbar, dass der Stromrichter 3 der FIG 2 ein Stromrichtergehäuse umfasst. Außerdem kann der Stromrichter 3 der FIG 2 das Gehäuse des Elektromotors nur teilweise umschließen, wie dies in FIG 3 gezeigt ist.

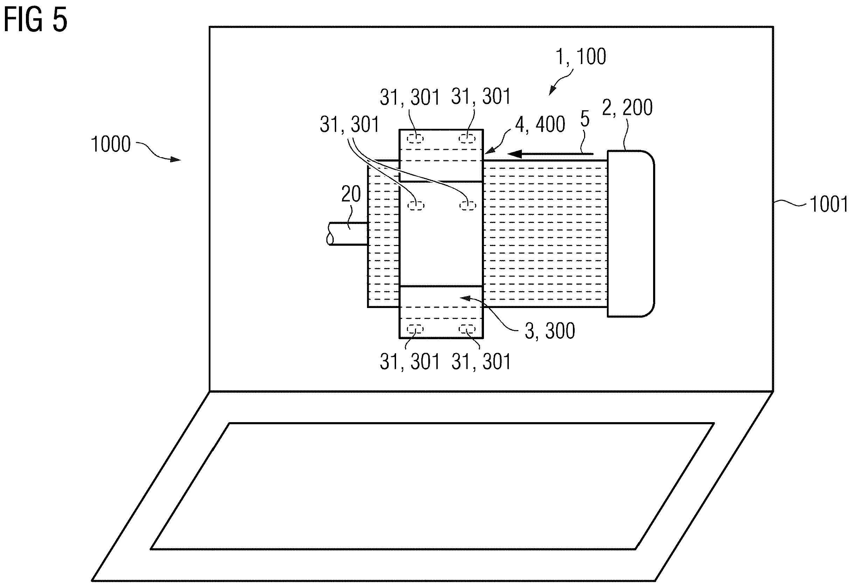

FIG 5 veranschaulicht einen digitalen Zwilling 1001 der elektrischen Antriebsvorrichtung 1 oder 100, der auf einer Recheneinrichtung, beispielsweise auf einem Laptop 1000 ausgeführt wird.

Der digitale Zwilling 1001 ist dazu konfiguriert, Kühlung 5 der Leistungseinheiten 31,301 des Stromrichters 3, 300, beispielsweise während des Betriebs des Elektromotors 2, 200, zu simulieren.

Der Simulationsvorgang auf der Recheneinrichtung 1000 kann beispielsweise folgende Schritte umfassen: Laden der Konstruktionsdaten der Antriebsvorrichtung 1, 100, Ermitteln und/oder Vorgeben der die Kühlung 5 festlegenden Parameter und/oder Größen (z.B. Art des Kühlmediums, Geschwindigkeit des Durchflusses, usw.); Ermitteln und/oder Vorgeben der den Betrieb des Elektromotors 2, 200 bestimmenden Parameter und/oder Größen; und Durchführen der Simulation.

Der digitale Zwilling kann beispielsweise als eine Simulationssoftware ausgebildet sein, die beispielsweise CAD-Daten der elektrischen Antriebsvorrichtung 1, 100 umfasst oder auf diese zwecks Simulation (fortlaufend) zugreifen kann.

Der digitale Zwilling kann eine oder mehr Schnittstellen vorsehen, beispielsweise Benutzerschnittstellen für Ein-/Ausgabe der Information und/oder Schnittstellen über welche eine andere Software, beispielsweise Software-Module an den digitalen Zwilling gekoppelt werden können und mit dem digitalen Zwilling Informationen austauschen können. Es ist beispielsweise denkbar, ein Umgebungs-Modul an den digitalen Zwilling anzukoppeln, damit Außeneinflüsse auf die Kühlung 5 der elektrischen Antriebsvorrichtung 1, 100 und insbesondere der Leistungseinheiten 31, 301 untersucht werden können.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Elektrische Antriebsvorrichtung (1,100) mit einer elektrischen rotatorischen Maschine (2,200), die ein Gehäuse aufweist,
einer Leistungselektronik-Vorrichtung (3,300), wobei die Leistungselektronik-Vorrichtung (3,300) an der elektrischen rotatorischen Maschine (2,200) angeordnet ist und zumindest ein Leistungshalbleitermodul (31,301) aufweist, welches zum Schalten eines elektrischen Stromes zur Versorgung der elektrischen rotatorischen Maschine (2,200) vorgesehen ist, und
einer Kühleinrichtung (4,400) zum unmittelbaren Kühlen der elektrischen rotatorischen Maschine (2,200), wobei die Kühleinrichtung (4,400) in das Gehäuse integriert ist,
**dadurch gekennzeichnet, dass**
die Kühleinrichtung (4,400) zum unmittelbaren Kühlen des zumindest einen Leistungshalbleitermoduls (31,301) ausgebildet ist, wobei das zumindest eine Leistungshalbleitermodul (31, 301) an einer Außenseite (405) des Gehäuses angeordnet ist, die Kühleinrichtung (4) für jede Leistungseinheit (34,37, 3011) des zumindest einen Leistungshalbleitermoduls (31,301) einen dieser Leistungseinheit (34,37,3011) zugeordneten an die Außenseite (405) angrenzenden Bereich (44,402) aufweist, mit welchem die Leistungseinheit (34,37,3011) in thermischem Kontakt steht, wobei der Bereich (44,402) zumindest einen wärmeleitenden Werkstoff (45,46) umfasst, der zum Ableiten der Wärme von der Leistungseinheit (34,37,3011) vorgesehen ist.

2. Antriebsvorrichtung nach Anspruch 1, wobei der Bereich (44) derart ausgebildet ist, dass die Wärme von der Leistungseinheit (34,37,3011) im Wesentlichen nur über den wärmeleitenden Werkstoff (45,46) abfließen kann.

3. Antriebsvorrichtung nach Anspruch 1 oder 2, wobei der Bereich (44,402) einen ersten wärmeleitenden Werkstoff (45) und einen zweiten wärmeleitenden Werkstoff (46) umfasst, wobei der erste wärmeleitende Werkstoff (45) eine niedrigere Wärmeleitfähigkeit als der zweite wärmeleitende Werkstoff (46) aufweist.

4. Antriebsvorrichtung nach Anspruch 3, wobei die Leistungseinheit (34,37,3011) mit dem zweiten wärmeleitenden Werkstoff (46) derart in thermischem Kontakt ist, sodass ein thermischer Kontakt der Leistungseinheit (34,37,3011) mit dem ersten wärmeleitenden Werkstoff (45) nur über den zweiten wärmeleitenden Werkstoff (46) erfolgen kann.

5. Antriebsvorrichtung nach Anspruch 3 oder 4, wobei der Bereich (402) eine der Anzahl der Leistungseinheiten des zumindest einen Leistungshalbleitermoduls (301) entsprechende Anzahl von voneinander getrennten Zonen (403) aufweist, wobei jede Zone (403) den zweiten wärmeleitenden Werkstoff (46) aufweist und zumindest einer, und vorzugsweise genau einer Leistungseinheit zugeordnet ist.

6. Antriebsvorrichtung nach einem der Ansprüche 3 bis 5, wobei der zweite wärmeleitende Werkstoff (46) eine in der Kühleinrichtung (4) ausgebildete Kavität füllt und vorzugsweise mit einer Außenseite des Gehäuses planbündig abschließt, insbesondere als Kupfer-Inlay ausgebildet ist.

7. Antriebsvorrichtung nach einem der Ansprüche 1 bis 6, wobei die Leistungselektronik-Vorrichtung (300) eine dem zumindest einen Leistungshalbleitermodul (301) zugeordnete Regelungseinrichtung (302) zum Überwachen und/oder zum Ansteuern des zumindest einen Leistungshalbleitermoduls (301) aufweist, wobei die Regelungseinrichtung (302) vorzugsweise am Außenumfang des Gehäuses angeordnet ist.

8. Antriebsvorrichtung nach einem der Ansprüche 1 bis 7, wobei die Kühleinrichtung (4,400) einen Kühlkörper (47,404) aufweist, der das Gehäuse der elektrischen rotatorischen Maschine bildet.

9. Antriebsvorrichtung nach einem der Ansprüche 1 bis 8, wobei die Leistungseinheiten (34,37) über zumindest eine Durchkontaktierung (35) mit einer gemeinsamen Leiterplatte (36) verbunden sind.

10. Antriebsvorrichtung nach Anspruch 9, wobei die Leiterplatte (36) zumindest einen flexiblen Abschnitt (32) aufweist, um das Gehäuse zumindest teilweise zu umschließen.

11. Antriebsvorrichtung nach einem der Ansprüche 1 bis 10, wobei die Leistungselektronik-Vorrichtung (3,300) das Gehäuse in azimutaler Richtung umschließt.

12. Antriebsvorrichtung nach einem der Ansprüche 1 bis 11, wobei die Leistungselektronik-Vorrichtung (3,300) in Axialrichtung der elektrischen rotatorischen Maschine (2,200) eine Ausdehnung aufweist, die kleiner oder gleich als ein Drittel einer axialen Größe der elektrischen rotatorischen Maschine (2,200) beträgt.

13. Antriebsvorrichtung nach einem der Ansprüche 1 bis 12, wobei die elektrische rotatorische Maschine (2,200) eine, zwei, drei, vier, sechs, acht, zehn oder zwölf Polpaare aufweist, wobei vorzugsweise die Anzahl der Leistungshalbleitermodule (31,301) der Anzahl der Polpaare korrespondiert.

14. Antriebsvorrichtung nach einem der Ansprüche 1 bis 13, wobei die Kühleinrichtung (4,400) dazu ausgebildet ist, ein Kühlmedium (43,401), beispielsweise gasförmiges oder flüssiges Kühlmedium aufzunehmen und in sich zirkulieren zu lassen, vorzugsweise ohne das Kühlmedium aus der Kühleinrichtung hinausgelangen zu lassen.

15. Digitaler Zwilling einer elektrischen Antriebsvorrichtung (1,100) nach einem der Ansprüche 1 bis 14, der dazu konfiguriert ist, Kühlung der Leistungseinheit, beispielsweise während des Betriebs der elektrischen Antriebsvorrichtung (1, 100), zu simulieren.
